Europäisches Patentamt

European Patent Office

Office européen des brevets

(19)

(11) **EP 0 885 351 B1**

(12) **EUROPÄISCHE PATENTSCHRIFT**

(45) Veröffentlichungstag und Bekanntmachung des Hinweises auf die Patenterteilung:
**07.06.2000 Patentblatt 2000/23**

(51) Int Cl.[7]: **F01P 3/20**, B60T 1/087, B60T 10/02

(21) Anmeldenummer: **97914194.2**

(22) Anmeldetag: **06.03.1997**

(86) Internationale Anmeldenummer:
**PCT/EP97/01119**

(87) Internationale Veröffentlichungsnummer:
**WO 97/33077 (12.09.1997 Gazette 1997/39)**

(54) **ANTRIEBSEINHEIT MIT EINEM MOTOR UND EINEM RETARDER**

DRIVE UNIT WITH A MOTOR AND A RETARDER

UNITE D'ENTRAINEMENT A MOTEUR ET A RALENTISSEUR

(84) Benannte Vertragsstaaten:
**AT BE CH DE DK ES FI FR GB GR IE IT LI LU MC NL PT SE**

(30) Priorität: **08.03.1996 DE 19609150**
**12.09.1996 DE 19637316**

(43) Veröffentlichungstag der Anmeldung:
**23.12.1998 Patentblatt 1998/52**

(73) Patentinhaber: **Voith Turbo GmbH & Co. KG**
**89522 Heidenheim (DE)**

(72) Erfinder:
• **FRIEDRICH, Jürgen**
**D-74564 Crailsheim (DE)**
• **VOGELSANG, Klaus**
**D-74564 Crailsheim (DE)**
• **HEILINGER, Peter**
**D-74564 Crailsheim (DE)**
• **ROSE, Peter**
**D-89522 Heidenheim (DE)**

(74) Vertreter: **Dr. Weitzel & Partner**
**Friedenstrasse 10**
**89522 Heidenheim (DE)**

(56) Entgegenhaltungen:
DE-A- 4 446 288    DE-A- 4 447 166
US-A- 3 367 461    US-A- 3 650 358

**Beschreibung**

Die Erfindung betrifft eine Antriebseinheit gemäß dem Oberbegriff des Anspruches 1 sowie ein Verfahren zur Regelung einer derartigen Antriebseinheit und eine Regeleinrichtung zur Einstellung des Bremsmomentes bei einer derartigen Antriebseinheit. Eine oberbegriffliche Antriebseinheit ist aus der DE 44 47 166 bekannt geworden.

Die DE 44 47 166 betrifft eine Bremsanlage mit einem hydrodynamischen Retarder, wobei das Arbeitsmittel des Retarders das Kühlmittel des Fahrzeuges ist und mit Hilfe eines Ventils Kühlmittel am Retarder vorbei oder durch diesen hindurchgeführt werden kann abhängig vom Fahrzeugbetriebszustand und der Ventilstellung.

Bei der aus der DE 37 13 580 C1 bekannten Antriebseinheit dient der Retarder dazu, im Kühlmittelkreislauf das Kühlmittel der Fahrzeug-Kühlanlage sowohl im normalen Traktionsbetrieb als auch im Dauerbremsbetrieb umzuwälzen ("Wasserpumpen-Retarder"). Dabei wird dieser Retarder durch eine geeignete Ventilanordnung derart gesteuert, daß er im Bedarfsfalle auch Bremsarbeit leisten kann. Bei der Funktion "Pumpen" soll die Leistungsaufnahme möglichst gering sein, während sie bei der Funktion "Bremsen" möglichst hoch sein soll. Die technischen Anforderungen sind somit sehr gegensätzlich. Dies führt dazu, daß die Funktion "Pumpen" nicht effektiv genug arbeitet, weil nämlich hierbei zu viel Leistung aufgenommen wird.

Trennt man hingegen die beiden Funktionen baulich, indem man außer dem Retarder eine separate Pumpe vorsieht, so lassen sich zwar Retarder und Pumpe derart auslegen, daß die Funktionen optimal erfüllt werden. Jedoch hat ein solches System einen hohen Raumbedarf. Dies ist nachteilig, da der Raum in Fahrzeugen gerade an der betreffenden Stelle sehr beengt ist.

Der Vollständigkeit halber sollen noch die folgenden Dokumente erwähnt werden:

Der aus der US-PS 3 720 372 bekannte Retarder ist mit dem Antriebsmotor integriert, dauernd mit der Kurbelwelle verbunden und stets vom Kühlmittel der Kühleinrichtung durchströmt. Dabei dient der Rotor des Retarders als Umwälzpumpe anstelle einer gesonderten Kühlmittelpumpe. Der Zweck dieser Einrichtung besteht darin, mittels des Retarders das Kühlmittel aufzuheizen um den Fahrgast-Innenraum zu erwärmen. Diesem Zweck dient auch eine am Retarder angeordnete Steuereinrichtung, die lediglich die Verteilung des Kühlmittels in Abhängigkeit von dessen Temperatur in einer Bypaß-Leitung durch den Kühler leitet.

Aus der DE-PS 33 01 560 ist ferner ein Retarder bekannt, der über eine schaltbare Kupplung mit der Kurbelwelle des Antriebsmotors und den Treibrädern des Fahrzeuges verbunden ist. Die Aufgabe des Retarders ist jedoch nicht die Aufnahme und Umsetzung hoher kinetischer Bremsenergie des Fahrzeuges in Wärme. Der Retarder wird ausschließlich als Heizgerät betrieben, wobei die Heizleistung unter Berücksichtigung einer zur Verfügung stehenden Antriebsleistung gesteuert werden soll. Das Kühlmittel des Motors ist gleichzeitig die Betriebsflüssigkeit des Retarders.

Ein aus der DE-AS 1 946 167 bekannter Retarder ist direkt mit der Kurbelwelle einer Verbrennungskraftmaschine verbunden, deren Kühlmittel auch als Betriebsflüssigkeit für den Retarder dient. Der Vorteil dieser Betriebsweise liegt darin, daß die anfallende Wärme unmittelbar in dem dem Kühler zugeleiteten Kühlmittel entwickelt wird und ein Wärmetauscher zwischen zwei Flüssigkeiten entbehrlich ist.

EP 95113594 beschreibt eine Antriebseinheit mit einem Motor und einem hydrodynamischen Retarder. Dabei ist zum Fördern des Kühlmittels ein Pumpenlaufrad vorgesehen, das axial zum Rotorschaufelrad des Retarders angeordnet ist.

Der Erfindung liegt die Aufgabe zugrunde, eine Antriebseinheit der eingangs beschriebenen Art derart zu gestalten, daß bei allen Betriebszuständen ein optimales Betreiben dieser Antriebsanlage möglich ist. Insbesondere soll das mögliche Bremsmoment des Retarders in einem großen Bereich variabel eingestellt werden können, so daß sich ein großer Regelbereich für das Bremsmoment im Bremsbetrieb ergibt.
Erfindungsgemäß wird diese Aufgabe durch die Merkmale von Anspruch 1 gelöst. Ein weiterer Aspekt der Erfindung besteht in der Angabe eines Regelverfahrens, das für den Retarder einen großen Regelbereich eröffnet. Ein derartiges Verfahren ist Gegenstand von Anspruch 14. Gemäß dem Verfahren der Erfindung wird ein vorbestimmtes Bremsmoment für den Retarder vorgegeben. Sodann wird dieses dadurch eingestellt, daß die Mittel zur Steuerung des Flusses durch die Zufuhrleitung zum und durch den Retarder sowie durch die Bypassleitung am Retarder vorbei derart angesteuert werden, daß ein erster vorbestimmter Anteil des Arbeitsmediums durch den Retarder und ein zweiter vorbestimmter Anteil am Retarder vorbeigeführt wird.

Neben dem Verfahren zur Regelung des Bremsmomentes stellt die Erfindung auch eine entsprechende Regeleinrichtung gemäß Anspruch 19 zur Verfügung.

In einer Weiterbildung der Erfindung kann vorgesehen sein, daß die Zufuhr- und Bypassleitungen Bestandteile eines kombinierten Kühl- und Bremskreislaufes bzw. eines reinen Kühlmittelkreislaufes sind.

Unter Verwendung bekannter Bauteile können die zwei miteinander verbundenen zuvor genannten Kreisläufe hergestellt werden. Mit Hilfe geeigneter Mittel können die beiden Kreisläufe so mit Arbeitsmedium beschickt werden, daß sie stets in optimaler Weise sowohl im Bremsbetrieb als auch im Nicht-Brems-Betrieb betrieben werden.

Die Mittel bzw. das Stellglied zum Beschicken der unterschiedlichen Kreisläufe umfassen bzw. umfaßt in einer bevorzugten Ausführungsform ein Ventil.

Wie aus dem Stand der Technik bekannt, kann das Mehrwegeventil mit zwei Schaltpositionen ausgebildet sein, wobei Arbeitsmedium in der ersten Schaltposition durch die Bypassleitung und damit in einer Ausgestaltung der Erfindung im reinen Kühlkreislauf und in der zweiten Schaltposition durch die Zufuhrleitung und damit im kombinierten Kühl- und Bremskreislauf geführt wird, also eine wahlweise Beschickung des einen oder anderen Kreislaufes vorgenommen wird. Eine Regelung des Bremsmomentes ist in einem derartigen Fall, da der Retarder ja ständig von Wasser durchströmt wird, nur zwischen dem maximalen Retarderbremsmoment und einem minimalen Retarderbremsmoment möglich. Eine Unterschreitung des minimalen Retarderbremsmomentes des Arbeitsmediums bei vorgegebenem Strom in dem kombinierten Kühl- und Bremskreislauf ist in einer derartigen Ausführungsform aufgrund der externen Leitungswiderstände nicht möglich.

Um das Bremsmoment des Retarders unter den sich bei einer vorbestimmten Gesamtstromkühlmittelmenge im kombinierten Kühl- und Bremskreislauf ergebendes minimales Retarderbremsmoment ($MRet_{min}$) absenken zu können, ist gemäß der Erfindung vorgesehen, anstelle einer wahlweisen Umschaltung zwischen reinem Kühlbetrieb und kombiniertem Kühl-Bremsbetrieb Zwischenstellungen zuzulassen. Hierdurch ergibt sich ein erster Teilstrom eines vorbestimmten Anteiles des Kühlmittelgesamtstromes, der durch den hydrodynamischen Retarder geleitet wird, also in vorliegendem Beispiel im kombinierten Kühl-Bremskreislauf geführt wird und einen zweiten eines vorbestimmten Anteiles des Kühlmittelgesamtstromes, der in vorliegendem Beispiel im reinen Kühlkreislauf geführt wird.

Als mögliche Mittel, mit denen der obengenannte Effekt erreicht werden kann, kommen vorzugsweise wiederum Ventile in Betracht, die eine derartige Aufspaltung des Gesamtstromes zulassen.

Beispielsweise sind dies in einer bevorzugten Ausführungsform Mehrwegeventile mit mindestens drei Schaltpositionen, bei denen in der ersten Schaltposition das Arbeitsmedium ausschließlich im Kühlkreislauf geführt wird, in der dritten Schaltposition wird es ausschließlich im kombinierten Kühl-Bremskreislauf geführt, während in der zweiten Schaltposition, die die oben angesprochene Mittenposition ist, beispielsweise eine Aufspaltung des Kühlstromes in einen gleich großen Teilstrom, der im Kühlkreislauf geführt wird und einen zweiten Teilstrom, der im Kühl-Bremskreislauf geführt wird, aufgespalten wird. Selbstverständlich wäre es möglich, in der zweiten Schaltposition eine stufenlose Aufteilung des Gesamtstromes vorzusehen, oder aber andere wie das angegebene Verhältnis einzustellen. Ein derartiges oben beschriebenes Mehrwegeventil ist in einer bevorzugten Ausführungsform als 3/2-Wegeventil als ein Ventil mit drei Anschlüssen und drei Stellungen ausgelegt.

Neben der Ausbildung als Mehrwegeventil ist es auch möglich, das Ventil als stetig regelndes Ventil bzw. stetig regelbares Ventil, auch Stetigventil genannt, auszubilden, das es zuläßt, beispielsweise mit Hilfe eines Kolbens die Teilströme für den reinen Kühlkreislauf und für den kombinierten Kühl-Bremskreislauf stufenlos einzustellen. Eine derartige Ausführungsform zeichnet sich insbesondere dadurch aus, daß sie besonders einfach ist.

In einer speziellen Ausführungsform der Erfindung kann zudem vorgesehen sein, anstelle der Ventile eine einfache Verzweigung mit nachgeschalteten Drosseln zu wählen, und das Verhältnis der Teilströme im reinen Kühlkreislauf und im kombinierten Kühl-Bremskreislauf durch eine entsprechende Einstellung der Drosseln zu steuern.

Durch die Erfindung kann des weiteren gewährleistet werden, daß das Arbeitsmedium beim Nicht-Brems-Betrieb weitgehend verlustarm umläuft.

Durch die erfindungsgemäße Kombination von Kühl- und Kühl-Bremskreislauf in einem ersten Ausführungsbeispiel kann das hydrodynamische Leistungspotential der Pumpe zum Aktivieren des Retarders genutzt werden, wobei dies in einer speziellen Ausgestaltung ohne Veränderung der hydrodynamischen Verhältnisse der Pumpe möglich ist.

Neben der Ausführungsart, bei der die Zufuhrleitung zum Retarder Teil eines kombinierten Kühl-/Bremskreislaufes und die Bypassleitung Teil des Kühlkreislaufes ist, ist in einer anderen Ausführungsart der Erfindung vorgesehen, daß Zufuhrleitung und Bypassleitung Teil eines reinen Arbeitsmittelkreislaufes, beispielsweise des Ölkreislaufes bei einem Sekundärretarder ist. Durch die erfindungsgemäße Anordnung bzw. das erfindungsgemäße Verfahren kann auch in einer derartigen Anordnung der Regelbereich für das einstellbare Retarderbremsmoment vergrößert werden.

Die Erfindung ist anhand der Zeichnungen näher erläutert. Es zeigen

Fig.1: eine erste Ausführungsform eines kombinierten Kreislaufes gemäß dem Stand der Technik

Fig. 1A: eine Ausführungsform gemäß Fig. 1 mit einer Drossel in der Retarderabfuhrleitung

Fig. 1B: eine Ausführungsform bei der der Kühlmittelkreislauf vom Kreislauf des Arbeitsmediums getrennt ist

Fig. 2: eine Ausführungsform gemäß Fig. 1 mit einem stetig regelndem Ventil

Fig. 2A: eine Ausführungsform der Erfindung mit getrennten Kreisläufen gemäß Fig. 2 und stetig regelndem Ventil

Fig. 3: eine Ausführungsform gemäß Fig. 1 mit einem 3-Positionen-Ventil

Fig. 4: eine Ausführungsform gemäß Fig. 1 mit einem 3-Positionen-Ventil, wobei die zweite Position eine stetige Einstellung zuläßt

Fig. 5: eine Ausführungsform gemäß der Erfindung mit einem Primärretarder und Drosseln als Mittel zum Einstellen der Teilströme

Fig. 6: eine Ausführungsform gemäß einer der Figur 1 bis 4 mit einem Sekundärretarder

Fig. 7: eine weitere Ausführungsform der Erfindung stellvertretend für Ausführungsformen mit mehr als einer Pumpe im Kühlkreislauf

Fig. 8: eine Ausführungsform der Erfindung bei der ein Teil der Kühlmittelmenge direkt zur Pumpensaugseite geleitet wird

Fig. 9: eine Ausführungsform der Erfindung gemäß Fig. 8 mit einem stetig regelnden Ventil

Fig. 10: eine Ausführungsform der Erfindung, bei der ein Teil der durch den Retarder fließenden Menge direkt zur Pumpensaugseite geleitet wird

Fig. 11: eine Ausführungsform der Erfindung, bei der ein Teil der durch den Retarder fließenden Menge direkt über den Kühler zur Pumpensaugseite geleitet wird

Fig. 12: Bremsmomentenverlauf MRet eines Primärretarders in Abhängigkeit von der Motordrehzahl.

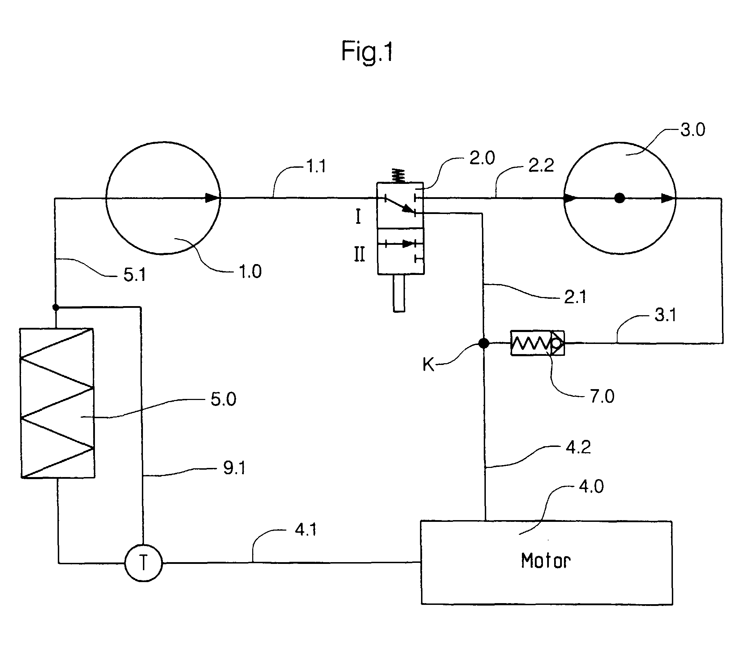

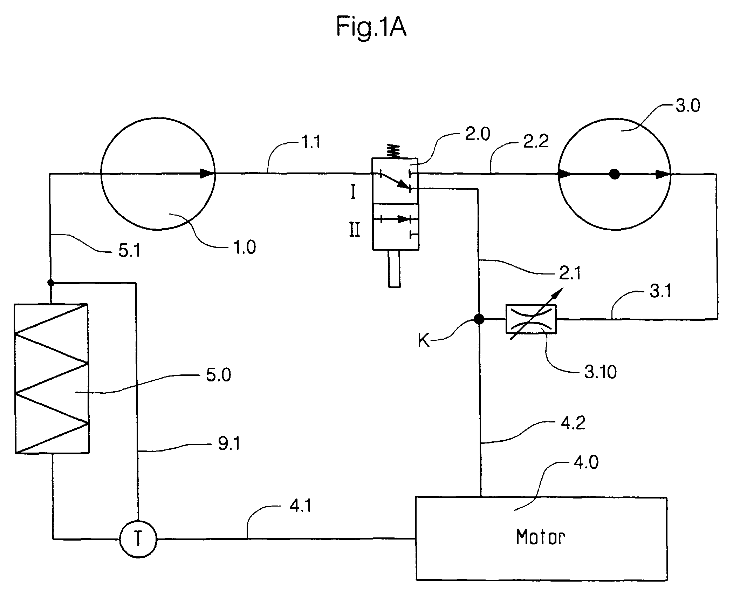

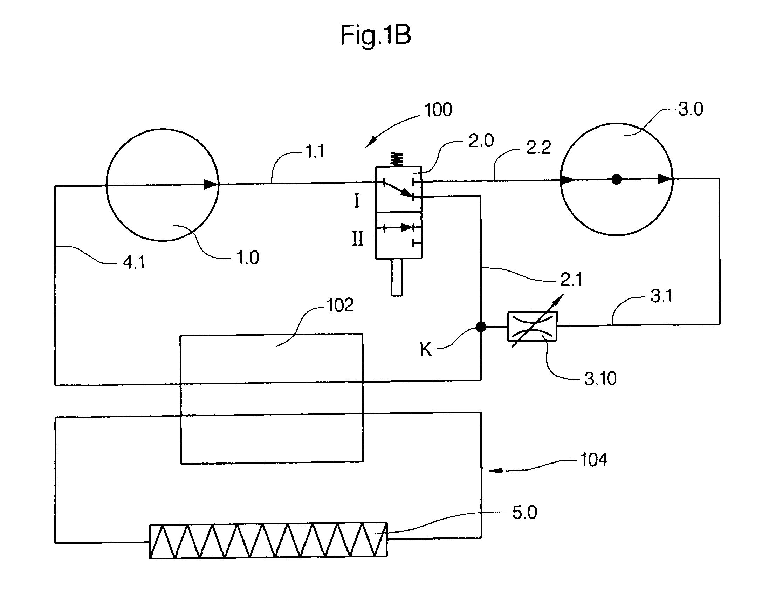

In Fig. 1 ist schematisch eine Antriebseinheit dargestellt, bei der das Arbeitsmedium des Retarders gleichzeitig Kühlmedium des Motors ist. Die Antriebseinheit ist dann wie folgt aufgebaut:

Ein Kühlkreislauf weist eine Pumpe 1.0 auf. Der Pumpe ist - in Fließrichtung des Arbeitsmediums - ein Ventil 2.0 nachgeschaltet, hier als 3/2-Wege-Ventil ausgeführt. Die Einheit umfaßt ferner einen hydrodynamischen Retarder 3.0, einen Motor 4.0 sowie einen Kühler 5.0. Der hydrodynamische Retarder ist in vorliegendem Ausführungsbeispiel, ohne daß hierin eine Beschränkung zu sehen ist, ein Primärretarder.

Die einzelnen Aggregate sind durch die folgenden Leitungen miteinander verbunden:

Eine Leitung 1.1 verbindet die Pumpe 1.0 mit dem Ventil 2.0. Eine Leitung 2.1 sowie eine Leitung 4.2 stellen eine Verbindung zwischen Ventil 2.0 und Motor 4.0 her. Eine weitere Leitung 2.2 verbindet das Ventil 2.0 mit dem Retarder 3.0. In Leitung 3.1 ist ein Rückschlagventil 7.0 eingebracht, das verhindert, daß bei geschaltetem Bypass, d. h. wenn sich das Umschaltventil in Stellung I befindet und das Arbeitsmedium am Retarder vorbeigeleitet wird, dieses nicht über Knotenstelle K in den Retarder zurückströmt und diesen unerwünschterweise befüllt.

Eine Leitung 3.1 sowie die Leitung 4.2 verbinden Retarder 3.0 mit dem Motor 4.0. Eine Leitung 4.1 verbindet den Motor 4.0 mit dem Kühler 5.0. Kühler 5.0 ist mittels einer Leitung 5.1 mit der Pumpe 1.0 verbunden.

In der in Fig. 1 dargestellten Ausführungsform ist es durch das Ventil 2.0 möglich, das Arbeitsmedium entweder durch einen ersten oder einen zweiten Kreislauf zu führen.

Der erste Kreislauf - im folgenden "Kühlkreislauf genannt - ist gebildet aus den folgenden Elementen: Pumpe 1.0, Ventil 2.0, Motor 4.0, Kühler 5.0 sowie die zwischen diesen Aggregaten befindlichen Leitungsabschnitten. Dieser Kreislauf wird beim Nicht-Brems-Betrieb benutzt. Dabei dient das Arbeitsmedium einzig und allein als Kühlmedium.

Der zweite Kreislauf - im folgenden "kombinierter Kühl- und Bremskreislauf genannt - ist aus den folgenden Aggregaten gebildet: Pumpe 1.0, Ventil 2.0, Retarder 3.0, Motor 4.0, Kühler 5.0 sowie aus den zugehörenden Leitungsabschnitten.

Dieser Kreislauf wird beim Bremsbetrieb benutzt. Das Arbeitsmedium führt dabei die beiden Funktionen des Bremsens und des Kühlens aus.

Als Arbeitsmedium kann bevorzugt ein Medium, das Wasser umfaßt, verwendet werden.

Die genannten Aggregate mit den zugehörenden Leitungsabschnitten bilden Strömungswiderstände. In einer vorteilhaften Ausführungsform soll die Differenz der Summe dieser Strömungswiderstände des einen und des anderen Kreislaufes eine geringe sein, d.h. sie sollen derart bemessen werden, wie dies im Hinblick auf die bestmögliche Kühlung sowie im Hinblick auf die Festigkeit der einzelnen Bauteile optimal ist.

Die Differenz der kummulierten Widerstände der beiden Kreisläufe läßt sich beispielsweise wie folgt minimieren:

Es können bei der Ausführungsform gemäß Figur 1 konstruktive Maßnahmen in Ventil 2.0 getroffen werden oder innerhalb des Ventils 2.0 in dessen Leitung 2.0.2.

Auch können die Leitungen 2.2 und 3.1 zur Beeinflussung des Widerstandes herangezogen werden, beispielsweise durch Einbau entsprechender Drosseln.

Kombinationen sind ebenfalls möglich. Ferner sind Maßnahmen denkbar, durch die Ventil 2.0 umgangen werden kann, beispielsweise mittels einer geschalteten Bypassleitung von Pumpe 1.0 zu Leitung 3.1 im Retarder.

Bei der nicht zur Erfindung gehörenden Ausführungsform gemäß Figur 1 besitzt das Ventil 2.0 die beiden eingezeichneten Stellungen I und II. In Stellung I wird das Arbeitsmedium am hydrodynamischen Retarder 3.0 in einem sogenannten Bypass vorbeigeleitet, wohingegen in Stellung II das Kühlmittel zu 100 % durch den hydrodynamischen Retarder hindurchströmt.

Da in Stellung II zur Gewährleistung der Motorkühlung ein ständiger Durchfluß von Arbeitsmedium durch den Retarder stattfindet, ist dessen minimales Retarderbremsmoment $MRet_{min}$ von dieser zur Kühlung des Motors notwendige Durchflußmenge abhängig. Dies aber bedeutet, daß in Stellung I bei 100 %igem Kühlmitteldurchfluß ein minimales Retarderbremsmoment $MRet_{min}$ aufgrund der Leitungswiderstände nicht unterschritten werden kann. Das minimale Retarderbremsmoment kann unterschritten werden, wenn das Ventil in Stellung II gebracht wird und das Arbeitsmedium am Retarder vorbeigeleitet wird. Dann aber ist der Retarder deaktiviert. Dies bedeutet, daß bei der nicht zur Erfindung gehörenden Ausführungsform gemäß Fig. 1 für Bremsmomente, die zwischen O und $MRet_{min}$ liegen, immer die Betriebsbremse, beispielsweise eine konventionelle Reibbremse, in einem Fahrzeug eingesetzt werden muß.

Fig. 1A zeigt eine Ausführungsform gemäß Fig. 1, bei der zur Einstellung des Retarderbremsmomentes erfindungsgemäß in Leitung 3.1 eine Drossel 3.10 eingebracht ist, mit der die Durchflußmenge von Kühl- bzw. Arbeitsmedium und damit das Bremsmoment auf Werte zwischen einem maximalen Retarderbremsmoment $MRet_{max}$ und dem vorgegebenen minimalen Retarderbremsmoment $MRet_{min}$ eingestellt werden kann. Diese Drossel 3.10 ist vorliegend zwischen 0 und 100 % Öffnung bzw. Schließung einstellbar. Da die Drossel die vollständige Schließung erlaubt, ist es möglich, das Rückschlagventil 7.0 hierdurch zu ersetzen. Läßt die Drossel keine vollständige Schließung zu, so muß in Leitung 2.1 wie schon bei Figur 1 ein Rückschlagventil 7.0 vorgesehen werden.

Zur Steuerung bzw. Regelung der Durchflußmenge wäre es auch möglich, die Pumpe 1.0 drehzahlgeregelt auszuführen.

In Fig. 1B ist eine Variante der Erfindung dargestellt, bei der Kühlkreislauf und der Kreislauf des Arbeitsmediums für den Retarder, das beispielsweise Öl sein kann, getrennt ist.

Der Arbeitskreislauf 100 umfaßt eine Pumpe 1.0, ein Ventil 2.0 zur Steuerung ds Arbeitsmittelstromes in Stellung II durch Zufuhrleitung 2.2 und Retarder 3.0 sowie in Stellung I durch Bypassleitung 2.1 am Retarder vorbei. Die Arbeitsmittelmenge im Retarder wird, wenn sich Ventil 2.0 in Stellung II befindet, durch die Einstellung der Drossel 3.10 geregelt. $MRet_{min}$ wird ind Stellung II bei 100 %igem Kühlmitteldurchfluß wie bei der Ausführung gemäß Figur 1 bzw. 1A durch die externen Leitungswiderstände bestimmt. Die im Bremsbetrieb anfallende Wärme wird im Wärmetauscher 102, an den Kühlmittelkreislauf 104, der Kühler 5.0 umfaßt, abgegeben.

Anstelle der Drossel 3.10 könnte auch eine drehzahlgeregelte Pumpe 1.0 mit veränderbarer Förderleistung anstelle einer solchen mit konstanter Förderleistung verwendet werden.

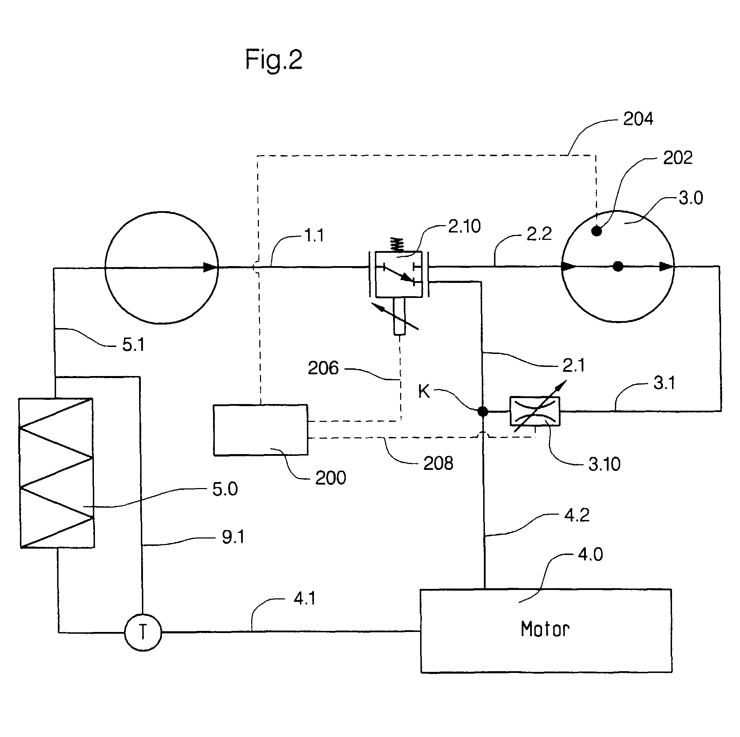

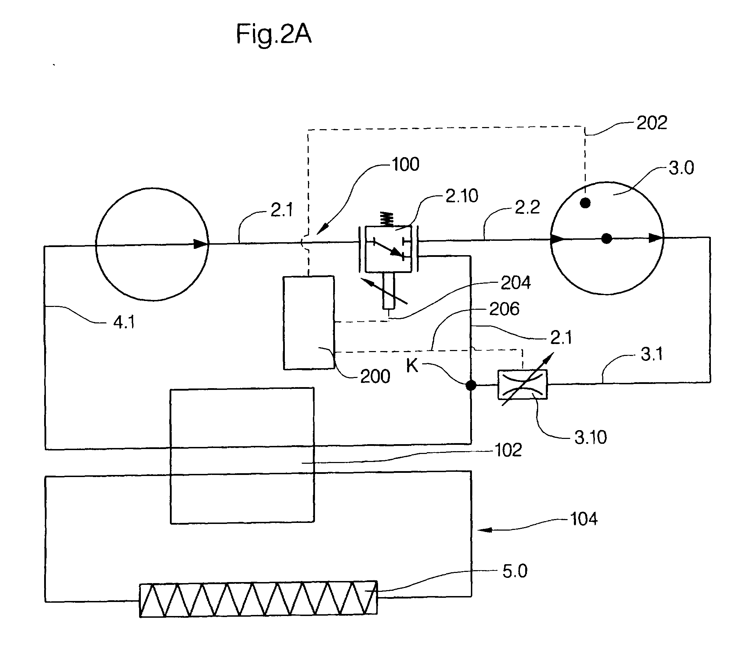

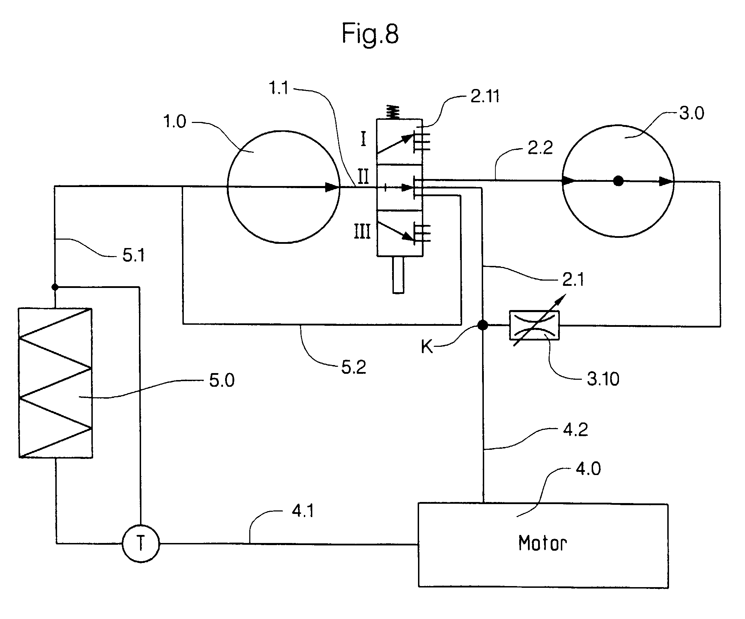

Mit dem in Fig. 2 gezeigten, stetig regelnden Ventil 2.10, das anstelle des Ventils 2.0 in Fig. 1 mit Positionen I und II tritt, ist es möglich, Retarderbremsmomente, die unterhalb von dem zuvor definierten $MRet_{min}$ liegen, zu erreichen. Ein Regelkonzept hierfür ist in Fig. 8 dargestellt und beschrieben.

Eine Unterschreitung wird dadurch erreicht, daß der Gesamtkühlmittelstrom in Leitung 1.1 mit Hilfe des stetig regelnden Ventils 2.10 in zwei Teilströme, zum einen durch die Leitung 2.2 und damit zum Retarder und zum anderen durch die Leitung 2.1 am Retarder vorbei aufgespalten wird. Das stetig relgende Ventil ermöglicht es, beispielsweise mittels eines Stellkolbens den Anteil des Teilstromes durch den Retarder und den Anteil des Teilstroms am Retarder vorbei beliebig einzustellen. Hierbei wird immer die Beziehung

$$G_{1.1} = x \, G_{1.1} + (1 - x) \, G_{1.1}$$

$$= T_{2.1} + T_{2.2}$$

mit $x \in [0,1]$

eingehalten, wobei $G_{1.1}$ den Gesamtkühlmittelstrom im Kühlkreislauf bezeichnet und $T_{2.2}$ den Teilstrom durch den Retarder sowie $T_{2.1}$ den Teilstrom am Retarder vorbei. Eine Grenze dieser Art der Bremsmomentenreduzierung ist erreicht, wenn die durch den Retarder geleitete Kühlmittelmenge so gering ist, daß der Druck in Leitung 2.1 geringer als der Druck im Knoten K ist. In einem derartigen Fall schließt das Rückschlagventil 7.0 bzw. die Drossel und die gesamt Kühlmittelmenge wird über den Bypass geführt.

Sollen mit Hilfe der in Fig. 2 dargestellten Anordnung Retarderbremsmomente aufgebaut werden, die unterhalb des zuvor definierten minimalen Retarderbremsmomentes liegen, so wird der zur Kühlung des Motors benötigte Gesamtkühlmittelstrom $G_{1.1}$ durch das stetig regelnde Ventil in zwei Teilströme $T_{2.1}$ und $T_{2.2}$ aufgespalten. Hierdurch kann $MRet_{min}$, wie zuvor definiert, unterschritten werden.

Fig. 2A zeigt eine Ausführungsform der Erfindung mit getrennten Kreisläufen 100, 104 gemäß Fig. 1B. Anstelle von Ventil 2.1 tritt regelndes Ventil 2.10.

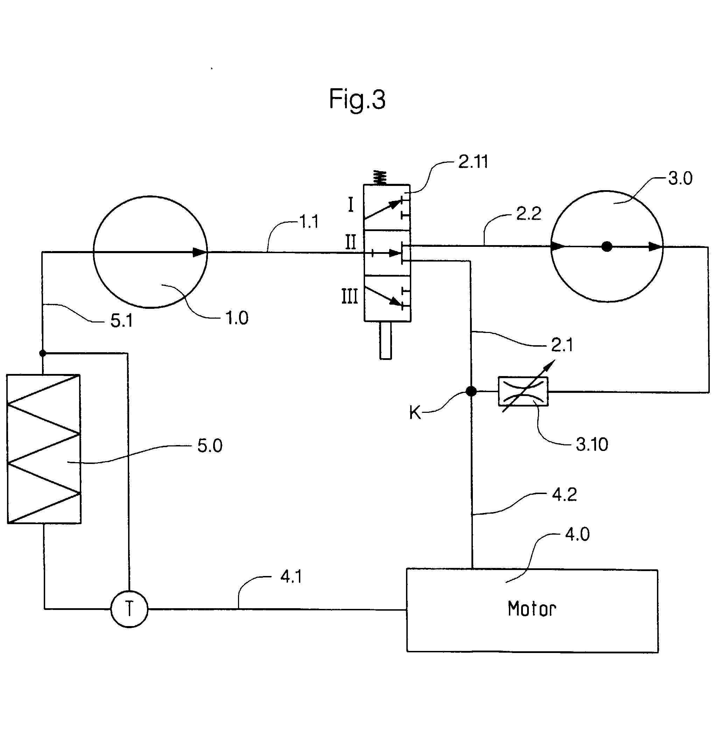

Sowohl in Fig. 2 wie in Fig. 2A ist beispielhaft für die Ausführungsformen der Fig. 3 bis 5 ein Ausführungsbeispiel der erfindungsgemäßen Steuer/Regeleinrichtung dargestellt.

Die Steuer-/Regeleinrichtung 200 kann zur Erfassung des Retarderbremsmomentes MRet mit einem Sensor 202 verbunden sein. Über den Sensor 202 kann ein Ist-Signal des Retarderbremsmomentes aufgenommen werden. Dieses Ist-Signal wird mit einem in der Steuer/Regeleinheit 200 abgelegten Sollwert für das Retarderbremsmoment, der beispielsweise vom Fahrgang abhängig sein kann, verglichen. Entsprechend beispielsweise dem bei Fig. 8 beschriebenen Regelungs- bzw. Steuerungskonzept wird durch die Steuer-/Regeleinheit 200 über Leitung 206 das stetig regelnde Ventil bzw. über Leitung 208 die Drossel 3.10 zur Einstellung des als Sollwert vorgegebenen Retarderbremsmomentes angesteuert.

Neben der beschriebenen Regelung, bei der ein ständiger Vergleich des Retarderbremsmoment-Istwertes mit dem Retarderbremsmoment-Sollwert stattfindet, kann in einer vereinfachten Ausführungsform lediglich eine Steuerung vorgesehen sein, die das Retarderbremsmoment auf einen vorgegebenen Wert einstellt. In einem derartigen Fall ist kein Sensor 202 zur Ermittlung des Retarderbremsmomentes erforderlich.

Fig. 3 zeigt eine alternative Ausführungsform der Erfindung gemäß Fig. 2, die ebenfalls eine Aufspaltung des Gesamtkühlmittelstromes in Teilströme $T_{2.1}$ und $T_{2.2}$. Anstelle des stetig regelnden Ventils 2.10 tritt ein Mehrwegeventil mit insgesamt drei Positionen I, II und III. Hierbei wird in Position I der Gesamtstrom durch den kombinierten Kühl- und Bremskreislauf, der den Retarder 3.0 umfaßt, geführt, wohingegen in Stellung III der gesamte Kühlmittelstrom über Leitung 2.1 am Retarder vorbeigeführt wird, also im reinen Kühlkreislauf zirkuliert. In Stellung II des Ventils ist die Aufspaltung des Gesamtstroms in Leitung 1.1 in Teilströme möglich. Bei der dargestellten Ausführungsform des Mehrwegeventils 2.11 ist in Stellung II die Aufspaltung in die Teilströme fest eingestellt, beispielsweise wird die Hälfte des Gesamtstromes durch Leitung 2.1 und die andere Hälfte des Gesamtstromes durch Leitung 2.2 geführt, d. h. x = 0,5. Selbstverständlich kann der Fachmann das Verhältnis x variieren oder ein Ventil vorsehen, das mehr als drei Stellungen umfaßt, wobei mehrere Stellungen vorgesehen sein können, in denen eine Aufspaltung des Gesamtstromes vorgenommen wird und diese Stellungen sich dadurch auszeichnen, daß die Anteile der Teilströme in den jeweiligen Stellungen unterschiedlich sind. So wäre beispielsweise denkbar ein Vierpositionsventil vorzusehen, indem in einer Stellung II eine Aufspaltung des Gesamtstromes im Verhältnis 30:70 auf die Teilströme $T_{2.1}$ und $T_{2.2}$ stattfindet, wohingegen in einer Stellung 3 eine Aufspaltung des Gesamtstromes von 70:30 in die Teilströme $T_{2.1}$ und $T_{2.2}$ vorgenommen wird.

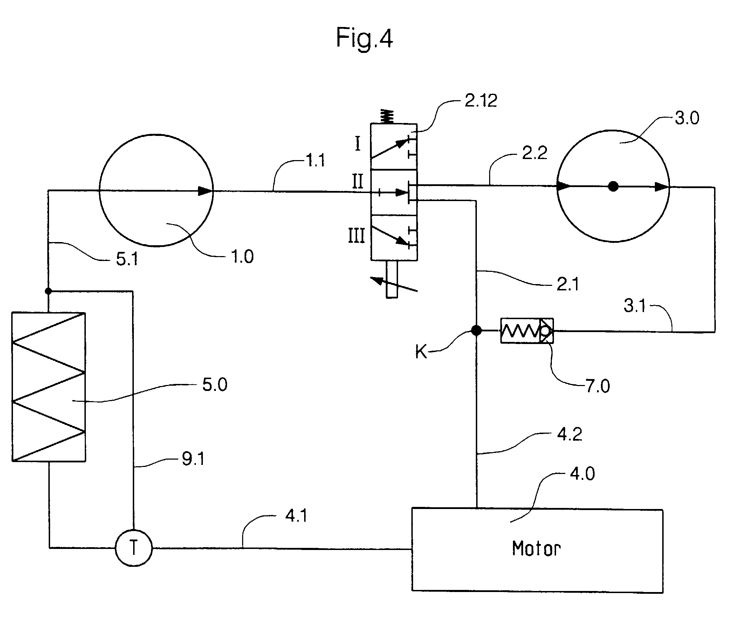

Fig. 4 zeigt eine alternative Ausführungsform zu Fig. 3 mit einem Mehrwegeventil 2.12, das im Gegensatz zum Mehrwegeventil 2.11 gemäß Fig. 3 in Stellung II Mittel umfaßt, mit denen der Gesamtstrom $G_{1.1}$ in zwei beliebig einstellbare Teilströme $T_{2.2}$ und $T_{2.1}$ aufgeteilt werden kann. In Stellung II weist also das Mehrwegeventil 2.12 funktional dieselben Eigenschaften wie das stetig regelnde Ventil 2.10 aus Fig. 2 auf.

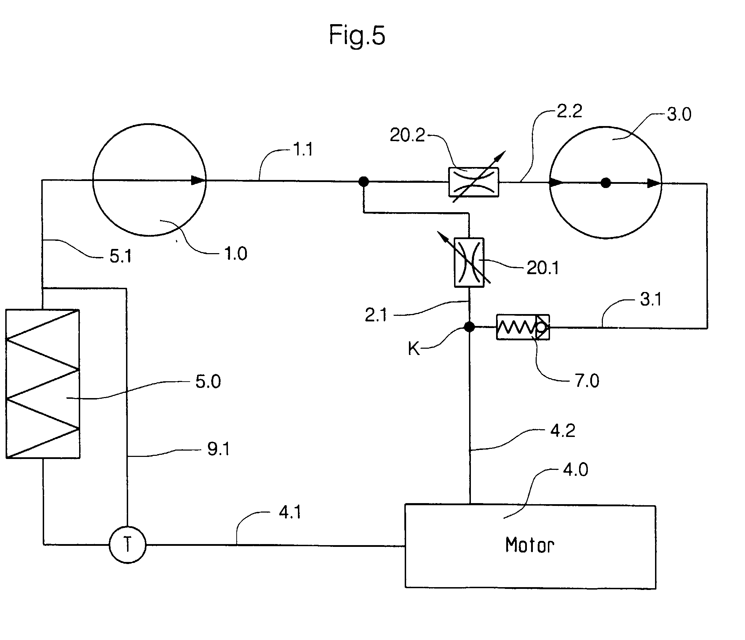

In Fig. 5 ist eine Ausführungsform der Erfindung dargestellt, bei der als Mittel zur Führung des Kühlmittelstromes entweder im Kühl-Bremskreislauf oder im Kühlkreislauf sowie zur Aufspaltung des Gesamtstromes $G_{1.1}$ in Teilströme $T_{2.1}$ und $T_{2.2}$ anstelle der in den Figuren 1 bis 4 dargestellten Ventile einstellbare Drosseln 20.1 und 20.2 in den Leitungen 2.1 und 2.2 vorgesehen sind. Durch entsprechende Einstellung der beiden Drosseln 20.1 und 20.2 kann ein Anteil des Kühlmittelstromes über leitung 2.1 und ein Anteil über Leitung 2.2 geführt werden. Die Teilströme $T_{2.1}$ und $T_{2.2}$ sind frei einstellbar, wenn die Drosseln stetig verändert werden können. Des weiteren ist vor Knoten K in Leitung 2.1 ein Rückschlagventil vorgesehen.

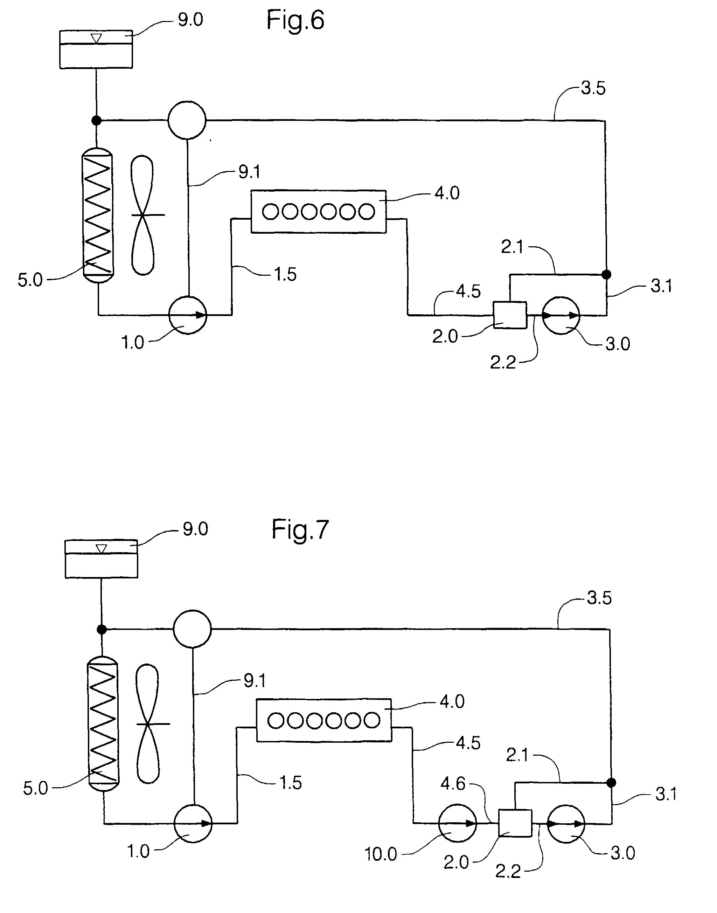

In Fig. 6 ist eine Ausführungsform mit einer im Kühlkreislauf angeordneten Pumpe 1.0 sowie einem Retarder 3.0, der als Sekundärretarder ausgebildet ist, dargestellt. Gleiche Bauteile wie in den Fig. 1 bis 5 sind in Fig. 6 mit gleichen Bezugsziffern bezeichnet. Das Umschaltventil ist mit 2.0 wie in Fig. 1 bezeichnet; dem Fachmann ist jedoch klar, daß das entil 2.0 durch sämtliche in den Figuren 1 bis 5 dargestellten Ventilvarianten wie beispielsweise ein stetig regelndes Ventil etc. ersetzt werden kann, wenn der Gesamtstrom $G_{4.5}$, der vorliegend vom Motor zum Ventil 2.0 geführt wird, in Teilströme $T_{2.1}$ und $T_{2.2}$ aufgeteilt werden soll.

Im Gegensatz zur in den Figuren 1 bis 5 dargestellten Ausführungsform der Erfindung mit Primärretarder ist in Figur 6 Pumpe 1.0 nicht direkt mit dem Ventil 2.0 verbunden, sondern über Leitung 1.5 mit Motor 4.0.

Das Kühlmedium wird, nachdem es Motor 4.0 durchströmt und die Wärme aufgenommen hat, über Leitung 4.5 zum Ventil 2.0 geführt. Bei der dargestellten Ausführungsform wird in einer Stellung des Ventils das Kühlmedium, das gleichzeitig Arbeitsmedium des Retarders ist, durch den Retarder geführt in der anderen Stellung am Retarder 3.0 vorbei. Bei Verwendung anderer Ventile wie in Figuren 2 bis 5 gezeigt, wäre eine Aufspaltung in Teilströme möglich.

Gemäß Fig. 6 wird der Kühlkreislauf gebildet aus: Pumpe 1.0, Motor 4.0, Ventil 2.0, und Kühler 5.0 sowie den zwischen diesen Aggregaten befindlichen Leitungsabschnitten.

Die Wasserpumpe 1.0 kann in den vorliegenden Ausführungsformen motordrehzahlabhängig betrieben werden.

Der Ausgleichsbehälter 9.0 sorgt über Leitung 9.1 dafür, daß an der Pumpensaugseite immer ein Druck anliegt, der einen Maximalwert und einen Minimalwert nicht über- bzw. unterschreiten darf.

Der kombinierte Kühl- und Bremskreisauf wird gebildet aus folgenden Aggregaten: Pumpe 1.0, Motor 4.0, Ventil 2.0, Retarder 3.0 sowie Kühler 5.0.

Der Sekundärretarder ist in vorliegendem Ausführungsbeispiel ein getriebeabtriebseitig angeordneter Retarder, der in Abhängigkeit von der Geschwindigkeit des Fahrzeugs angetrieben wird.

Nachfolgend wird stellvertretend für eine Ausführungsform, die mehrere Pumpen im Kühlkreislauf umfasst, eine Variante mit zwei Pumpen in Fig. 7 dargestellt. Gleiche Aggregate sind mit gleichen Bezugszeichen wie in den Fig. 1 bis 6 versehen. Neben der Pumpe 1.0 zwischen Kühler 5.0 und Motor 4.0 ist in den Kühlkreislauf dem Retarder 3.0 strömungsmäßig vorangeordnet eine weitere Pumpe 10.0. Zwischen Pumpe 10.0 und Retarder befindet sich ein weiterer Leitungsabschnitt 4.6. Der Retarder ist gemäß vorliegendem Beipiel eine Sekundärretarder, ohne daß hierin eine Beschränkung zu sehen ist.

Das Ventil, das irgendeines der hierin beschriebenen Ventile sein kann, ist in Ströungsrichtung im kombinierten Kühl-/Bremskreislauf der Ausführungsform gemäß Fig. 7 bestehend aus Pumpe 1.0, Motor 4.0, Pumpe 10.0, Ventil 2.0, Retarder 4.0 dem Retarder vorgeordnet.

Durch die Verwendung von zwei Pumpen 1.0, 10.0 wird folgender Vorteil erzielt:

Die Pumpe 1.0, deren Drehzahl mit der Drehzahl des Motors gekoppelt ist, kann um die Leistung der Pumpe 10.0 verkleinert werden. Die weitere Pumpe 10.0 kann dann bspw. als getriebeabtriebseitige Pumpe ausgeführt werden, d.h. ihre Förderleisung ist fahrgeschwindigkeitsabhängig. Dadurch wird erreicht, daß immer nur dann, wenn die Pumpleistung von Pumpe 10.0 wirklich benötigt wird, nämlich bei hohen Fahrgeschwindigkeiten oder im Retarderbetrieb die Pumpleistung zur Verfügung gestellt wird. Die ständig mit Motordrehzahl laufende Wasserpumpe 1.0 kann kleiner dimensioniert und damit kostengünstiger produziert werden.

In der dargestellten besonderen Ausführungsform ist das Ventil 2.0 in Strömungsrichtung unmittelbar vor dem Retarder 3.0 angeordnet. Denkbar ist aber auch, daß die Pumpe 10.0 hinter dem Ventil 2.0 und vor dem Retarder angeordnet ist.

Selbstverständlich können in analoger Weise wie oben dargestellt auch mehr als zwei Pumpen in den Kühl- und/oder kombinierten Kühl-/Bremskreislauf eingebracht werden.

In den Figuren 8 - 11 sind Weiterbildungen der Erfindung gezeigt, mit denen noch niedrigere Retarderbremsmomente als im Falle der bloßen Aufteilung des Gesamtstromes in zwei Teilströme $T_{2.1}$ und $T_{2.2}$ erreicht werden können.

Wie zuvor erwähnt kann aufgrund des Druckes am Knoten K nur ein durch den Druck vorbestimmter minimaler Teilstrom $T_{2.2}$ eingestellt werden. Wird dieser unterschritten, so schließt die Drossel 3.10 bzw. das Rückschlagventil 7.0, um ein Befüllen des Retarders über einen Rückfluß zu verhindern.

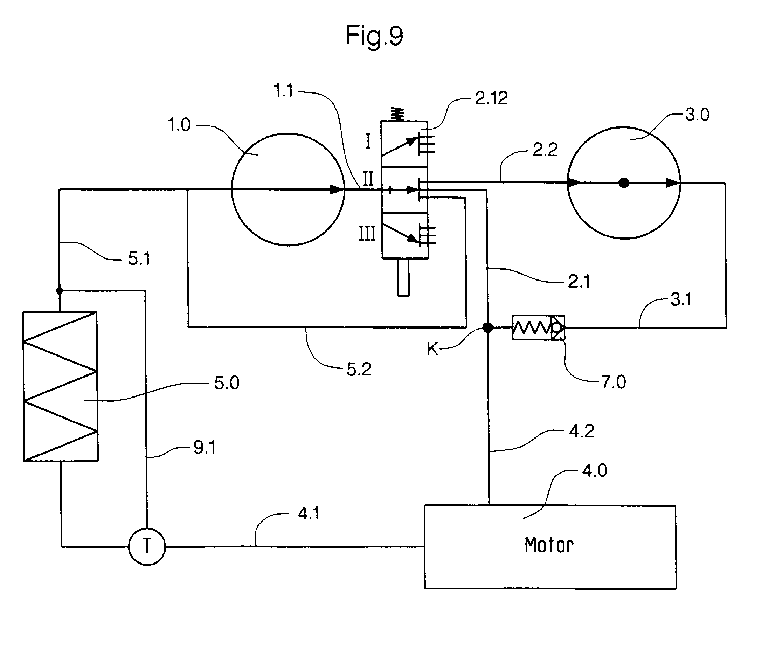

Gemäß der in Fig. 8 und 9 dargestellten Ausführungsform ist vorgesehen, den Gesamtstrom in drei Teilströme $T_{2.2}$, $T_{2.1}$ sowie $T_{5.2}$ aufzuteilen. Der Strom im Punkt K setzt sich dann aus $T_{2.1} + T_{2.2}$ zusammen und es gilt: $T_{2.1} + T_{2.2} = G - T_{5.2}$, d. h. der Druck im Punkt K ist in diesem Fall geringer als bei den Ausführungsformen gemäß den Figuren 1 - 7. Hierdurch ist es möglich, einen geringeren Teilstrom $T_{2.2}$ als in Fig. 1 - 7 über den Retarder zu schicken, da das Rückschlagventil bzw. die Drossel Leitung 2.2 erst bei niedrigeren Drükken am Punkt K sperrt. Dies aber wiederum bedeutet, daß das Retarderbremsmoment unterhalb der mit einer Ausführungsform gemäß den Figuren 1 - 7 erzielbares abgesenkt werden kann. Der Teilstrom $T_{5.2}$ wird über Leitung 5.2 vom Ventil 2.11 zur Saugseite der Pumpe 1.0 geleitet. In vorliegendem Fall ist Ventil 2.11 analog zur Fig. 3 als Mehrwegeventil ausgebildet, wobei in Stellung II der Gesamtstrom in insgesamt drei Teilströme $T_{2.1}$, $T_{2.2}$ und $T_{5.2}$ in einem festen Verhältnis aufgeteilt wird.

In Fig. 9 ist eine Ausführungsform der Erfindung gemäß Fig. 8 mit einem Mehrwegeventil, das in Stellung II ein stetig regelndes Ventil analog zur Fig. 4 ist, dargestellt. Gleiche Elemente wie in den vorausgegangenen Figuren werden wiederum mit gleichen Bezugsziffern bezeichnet.

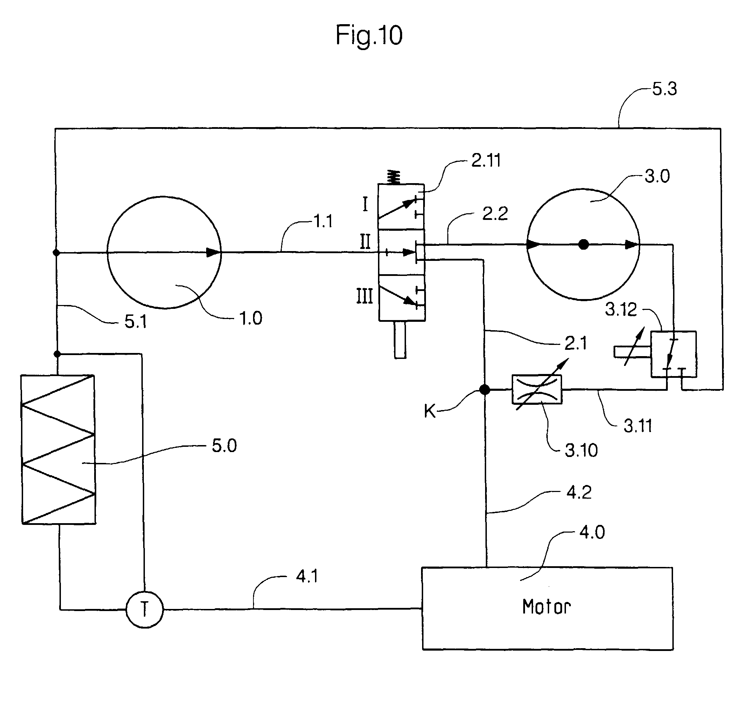

Fig. 10 zeigt eine andere Variante der Erfindung, mit der das minimale Retarderbremsmoment unter das mit der Anordnung gemäß Fig. 1 - 7 mögliche abgesenkt werden kann.

Gemäß Fig. 10 ist vorgesehen den Teilstrom $T_{2.2}$, der durch den Retarder im Bremsbetrieb fließt, mit Hilfe von Ventil 3.12, das in vorliegendem Beispiel als stufenlos einstellbares stetig regelndes Ventil ausgebildet ist, in zwei Teilströme $T_{3.11}$ und $T_{5.3}$ aufzuspalten. Teilstrom $T_{5.3}$ wird über Leitung 5.3 zur Saugseite der Pumpe 1.0 gefördert.

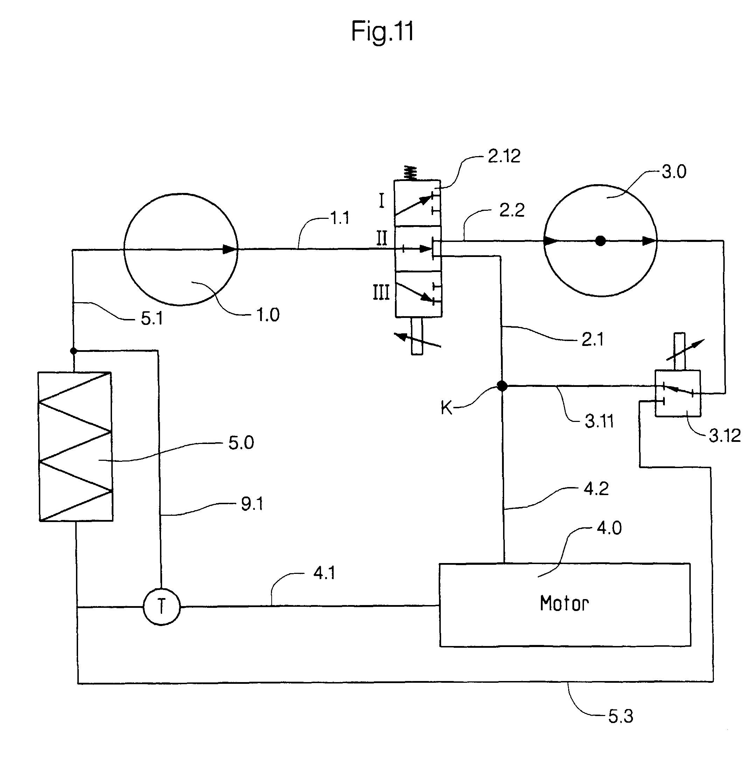

Figur 11 zeigt eine Ausführungsform der Erfindung gemäß Fig. 10. Wiederum wird der Teilstrom $T_{2.2}$, der durch den Retarder fließt, in zwei Teilströme $T_{3.11}$ und $T_{5.3}$ aufgespalten. Die Aufspaltung in zwei Teilströme wird durch ein Ventil 3.12 in einem festen Verhältnis vorgenommen, das beliebig festgelegt werden kann. Im Gegensatz zu Fig. 10 wird der Teilstrom 5.3, der zur Saugseite der Pumpe geführt wird, jedoch über Kühler 5.0 geleitet. Dies hat den Vorteil, daß der durch den im Bremsbetrieb arbeitende Retarder erwärmte Teilstrom 5.3 vor Eintritt in die Pumpe gekühlt wird, wohingegen bei der Ausführungsform gem. Figur 10 eine Abkühlung vor erneutem Eintritt in den Retarder nur dadurch erreicht wird, daß der erwärmte Kühlmittelteilstrom $T_{5.3}$ mit dem über den Kühler geleiteten, kalten Kühlmittelteilstrom $T_{5.1}$ gemischt wird.

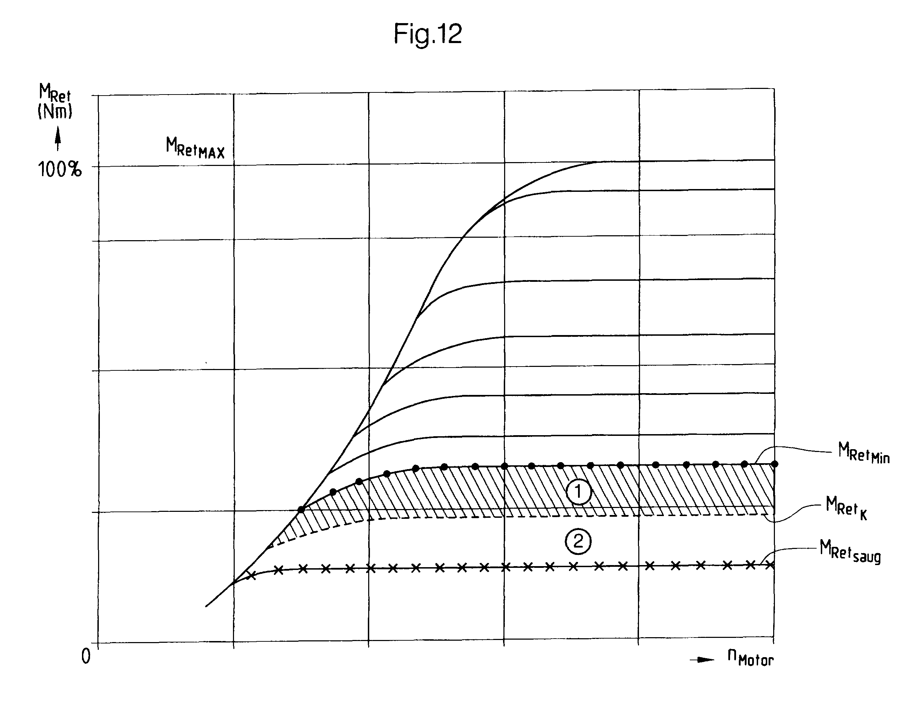

In Fig. 12 ist der Verlauf des Retarderbremsmomentes für die unterschiedlichen Ausführungsformen der Erfindung dargestellt, ohne daß dies hierin eine Beschränkung zu sehen ist.

Für bestimmte Fahrsituationen, beispielsweise Fahrgänge bei einem Primärretarder kann es wünschenswert sein, das Retarderbremsmoment auf ein maximal zulässiges Bremsmoment beispielsweise auf ungefähr 85% des maximalen Retarderbremsmomentes $MRet_{max}$ oder 70% von $MRet_{max}$ zu begrenzen. Dies geschieht bei den Ausführungsformen gemäß Fig. 1-1 B beispielsweise dadurch, daß bei 100 %igem Kühlmitteldurchfluß durch den Retarder 3.0 die Kühlmittelmenge beispielsweise mit Hilfe der Drossel 3.10 eingestellt wird.

Um eine Überhitzung des Motors 4.0 auszuschließen, muß eine bestimmte Kühlmittelmenge gefördert werden. Diese wiederum bestimmt aufgrund der externen Widerstände das minimale Retarderbremsmoment $MRet_{min}$ bei 100 %igem Kühlmitteldurchfluß.

Eine weitere Reduzierung des Retarderbremsmomentes bei Ausführungsformen gemäß Fig. 1-1B unterhalb $MRet_{min}$ ist nicht möglich. Es bleibt nur die vollständige Deaktivierung des Retarders.

Gemäß einem besonderen Aspekt der Erfindung, die die Ausführungsform der Figuren 2 bis 5 betrifft, kann durch eine Aufspaltung des Arbeitsmediumsstroms in Teilströme $MRet_{min}$ erreicht werden.

Dieser Bereich ist schraffiert und mit 1 bezeichnet. Untere Grenze einer derartigen Einstellung ist die Kennlinie für $MRet_K$, die aufgrund des Druckes im Knotenpunkt K nicht unterschritten werden kann.

Eine weitere Absenkung des minimalen Retarderbremsmomentes ist mit Ausführungsformen gemäß Fig. 8-11 möglich. Bei diesen Ausführungsformen wird ein Teilstrom des Gesamtstromes direkt der Pumpensaugseite zugeführt; nur ein Teilstrom durchströmt Retarder und Bypass und trifft in Punkt K wieder zusammen. Derartige Ausführungsformen erlauben ein Absenken von $MRet_{min}$ auf $MRet_{Saug}$ und erweitern den Bereich um den mit 2 gekennzeichneten.

**Patentansprüche**

1. Antriebseinheit, die mindestens umfaßt:

      einen Motor, einen hydrodynamischen Retarder und mindestens eine Pumpe;
      mindestens eine Zufuhrleitung für Arbeitsmedium zum Retarder;
      mindestens eine Bypassleitung, mit der Arbeitsmedium am Retarder vorbeigeführt wird;

   dadurch gekennzeichnet, daß die Antriebseinheit desweiteren umfasst:
   Mittel, die dem Retarder in Strömungsrichtung vorgeordnet sind und mit deren Hilfe der Gesamtstrom des Arbeitsmediums in mindestens zwei vorbestimmte Anteile aufgespalten wird, wobei ein erster vorbestimmter Anteil des Arbeitsmediums durch die Zufuhrleitung durch den Retarder und ein zweiter vorbestimmter Anteil durch eine erste Bypassleitung am Retarder vorbeigeführt wird.

2. Antriebseinheit nach Anspruch 1, dadurch gekennzeichnet, daß die Mittel den Gesamtstrom in drei vorbestimmte Anteile aufspalten, wobei der dritte vorbestimmte Anteil in einer zweiten Bypassleitung am Retarder und der ersten Bypassleitung vorbei zur Saugseite der Pumpe geführt wird.

3. Antriebseinheit nach Anspruch 1 oder 2, dadurch gekennzeichnet, daß die erste Bypassleitung dem Retarder nachgeordnete Mittel umfaßt, mit deren Hilfe der durch den Retarder geführte Strom in zwei Retarderteilströme aufgespalten werden kann, wobei der erste Retarderteilstrom mit dem Teilstrom der ersten Bypassleitung zusammengeführt und der zweite Retarderteilstrom am Retarder vorbei zur Saugseite der Pumpe geführt wird.

4. Antriebseinheit gemäß einem der Ansprüche 1 bis 3, dadurch gekennzeichnet, daß die dem Retarder vorgeordneten Mittel eine Ventileinrichtung umfassen.

5. Antriebseinheit nach Anspruch 4, dadurch gekennzeichnet, daß die Ventileinrichtung ein Mehrwegeventil mit mindestens drei Schaltpositionen ist, so daß das Arbeitsmedium in der ersten Schaltposition durch die Bypassleitung und in der dritten Schaltposition durch die Zufuhrleitung sowie in der zweiten Schaltposition der Gesamtstrom in mindestens zwei Teilströme aufgespalten wird, wobei ein erster vorbestimmter Anteil des Arbeitsmediums durch die Bypassleitung und ein zweiter vorbestimmter Anteil des Arbeitsmediums durch die Zufuhrleitung geführt.

6. Antriebseinheit nach einem der Ansprüche 4 bis 5, dadurch gekennzeichnet, daß das Ventil als stetig regelndes Ventil ausgebildet ist, so daß die Aufspaltung des Gesamtstromes in mindestens einen ersten vorbestimmten Anteil des Arbeitsmediums, der durch die Bypassleitung geführt wird und einen zweiten vorbestimmten Anteil des Arbeitsmediums, der durch die Zufuhrleitung geführt wird, stufenlos oder feinstufig einstellbar ist.

7. Antriebseinheit nach einem der Ansprüche 1 bis 6, dadurch gekennzeichnet, daß die Zufuhrleitung Bestandteil eines kombinierten Kühl- und Bremskreislaufes ist und die Bypassleitung Bestandteil eines Kühlkreislaufes ist.

8. Antriebseinheit nach einem der Ansprüche 1 bis 7, dadurch gekennzeichnet, daß mindestens eine weitere Pumpe im Kühlkreislauf und/oder im kombinierten Kühl- und Bremskreislauf angeordnet ist.

9. Antriebseinheit nach Anspruch 8, dadurch gekennzeichnet, daß den Mitteln mindestens eine weitere Pumpe in Strömungsrichtung nachgeordnet ist.

10. Antriebseinheit nach einem der Ansprüche 1 bis 9, dadurch gekennzeichnet, daß die Mittel Drosseln und/oder eine regelbare Pumpe umfassen.

11. Antriebseinheit nach einem der Ansprüche 1 bis 10, dadurch gekennzeichnet, daß der Retarder ein Primärretarder ist.

12. Antriebseinheit gemäß einem der Ansprüche 1 bis 10, dadurch gekennzeichnet, daß der Retarder ein Sekundärretarder ist.

13. Antriebseinheit gemäß Anspruch 12, dadurch gekennzeichnet, daß der Arbeitsmedium- bzw. Kühlmediumkreislauf getrennt vom gewöhnlichen Motorkühlkreislauf ist und der Wärmeübergang auf den gewöhnlichen Motorkühlkreislauf mittels eines Wärmetauschers erfolgt.

14. Verfahren zur Einstellung des Retarderbremsmomentes einer Antriebseinheit gemäß einem der Ansprüche 1 bis 13, wobei ein vorbestimmtes Bremsmoment des Retarders dadurch eingestellt wird, daß das Verfahren mindestens die nachfolgenden Schritte umfaßt:

der Gesamtstrom des Arbeitsmediums wird in mindestens zwei Teilströme in Strömungsrichtung vor dem Retarder aufgeteilt, wobei ein erster vorbestimmter Anteil des Arbeitsmediums als Teilstrom durch die Zufuhrleitung und durch den Retarder geführt und ein zweiter vorbestimmter Anteil als Teilstrom durch die erste Bypassleitung am Retarder vorbeigeführt wird.

15. Verfahren nach Anspruch 14, dadurch gekennzeichnet, daß der Gesamtstrom in drei Teilströme aufgespalten wird, wobei der dritte vorbestimmte Teilstrom in einer zweiten Bypassleitung am Retarder und der ersten Bypassleitung vorbei zur Saugseite der Pumpe geführt wird.

16. Verfahren nach einem der Ansprüche 14 bis 15, dadurch gekennzeichnet, daß der Teilstrom, der durch den Retarder geführt wird, in zwei Retarderteilströme aufgespalten wird, wobei der erste Retarderteilstrom mit dem Teilstrom der ersten Bypassleitung zusammengeführt und der zweite Retarderteilstrom am Motor vorbei zur Saugseite der Pumpe geführt wird.

17. Verfahren nach einem der Ansprüche 14 bis 16, dadurch gekennzeichnet, daß die Einstellung des durch die Zufuhrleitung geführten ersten Anteils von Arbeitsmedium und des durch die Bypassleitung geführten zweiten Anteils von Arbeitsmedium mit Hilfe von dem Retarder in Strömungsrichtung vorgeordneten Mitteln erfolgt.

18. Verfahren nach Anspruch 17, dadurch gekennzeichnet, daß zur Einstellung des ersten und des zweiten Anteils von Arbeitsmedium des weiteren dem Retarder in Strömungsrichtung nachgeordnete Mittel vorgesehen sind.

19. Antriebseinheit gemäß einem der Ansprüche 1 bis 13, mit einer Regeleinrichtung zur Einstellung eines vorbestimmten Bremsmomentes, wobei die Regeleinrichtung umfaßt:

mindestens eine Steuer-/Regeleinheit und die Regeleinheit dadurch gekennzeichnet ist, daß sie mindestens eine Steuer-/Regeleinheit aufgrund des vorgegebenen Bremsmomentes mindestens die Mittel zur Aufteilung des Arbeitsmediums derart ansteuert, daß entsprechend dem einzustellenden Bremsmoment mindestens ein erster Anteil des Arbeitsmediums durch den Retarder und ein zweiter Anteil am Retarder vorbeigeführt wird.

20. Antriebseinheit gemäß Anspruch 19, dadurch gekennzeichnet, daß die Antriebseinheit zur Einstellung des vorbestimmten Retarderbremsmomentes des weiteren dem Retarder in Strömungsrichtung nachgeordnete Mittel aufweist.

**Claims**

1. Drive unit which comprises at least a motor, a hydrodynamic retarder and at least one pump; at least one feed line for feeding operating medium to the retarder; at least one bypass line which conveys operating medium past the retarder; characterised in that the drive unit also comprises means which are arranged upstream of the retarder in the direction of flow, by means of which the total flow of operating medium is divided into at least two predetermined parts, whereby a first predetermined part of the operating medium is fed through the retarder via the feed line and a second predetermined part is conveyed past the retarder via a first bypass line.

2. Drive unit according to claim 1, characterised in that the means divide the total flow into three predetermined parts, whereby the third predetermined part is conveyed in a second bypass line past the retarder and the first bypass line to the suction side of the pump.

3. Drive unit according to claim 1 or 2, characterised in that the first bypass line comprises means arranged downstream of the retarder, by means of which the flow guided by the retarder can be divided into two retarder part flows, whereby the first retarder part flow is joined together with the part flow of the first bypass line, and the second retarder part flow is conveyed past the retarder to the suction side of the pump.

4. Drive unit according to one of claims 1 to 3, characterised in that the means arranged upstream of the retarder comprise a valve device.

5. Drive unit according to claim 4, characterised in that the valve device is a multiway valve with at least three operating positions, so that the operating medium in the first operating position is fed via the bypass line and in the third operating position via the feed line and in the second operating position the total flow is divided into at least two part flows, whereby a first predetermined part of the operating medium is conveyed through the bypass line and a second predetermined part of the operating medium through the feed line.

6. Drive unit according to one of claims 4 to 5, characterised in that the valve is designed as continuously controlling valve, so that the division of the total flow into at least one first predetermined part of the operating medium, which is conveyed by the bypass line, and a second predetermined part of the operating medium, which is conveyed by the feed line, can be regulated steplessly or in finely graduated steps.

7. Drive unit according to one of claims 1 to 6, characterised in that the feed line is a component of a combined cooling and braking circuit and the bypass line is a component of a cooling circuit.

8. Drive unit according to one of claims 1 to 7, characterised in that at least one additional pump is arranged in the cooling circuit and/or in the combined cooling and braking circuit.

9. Drive unit according to one of claim 8, characterised in that at least one additional pump is arranged downstream of the means in flow direction.

10. Drive unit according to one of claims 1 to 9, characterised in that the means comprise restrictors and/or a controllable pump.

11. Drive unit according to one of claims 1 to 10, characterised in that the retarder is a primary retarder.

12. Drive unit according to one of claims 1 to 10, characterised in that the retarder is a secondary retarder

13. Drive unit according to claim 12, characterised in that the operating medium or cooling medium circuit is separate from the standard motor cooling circuit and the heat transfer to the standard motor cooling circuit is performed by means of a heat exchanger.

14. Method for adjusting the retarder braking torque of a drive unit according to one of claims 1 to 13, whereby a predetermined braking torque of the retarder is adjusted, in that the method comprises at least the following stages: the total flow of the operating medium is divided into at least two part flows in flow direction before the retarder, whereby a first predetermined part of the operating medium is conveyed as part flow through the feed line and the retarder and a second predetermined part is conveyed past the retarder as a part flow via the first bypass line.

15. Method according to claim 14, characterised in that the total flow is divided into three part flows, whereby the third predetermined part flow in a second bypass line is conveyed past the retarder and the first bypass line to the suction side of the pump.

16. Method according to one of claims 14 to 15, characterised in that the part flow which is guided by the retarder is divided into two retarder part flows, whereby the first retarder part flow is joined together with the part flow of the first bypass line and the second retarder part flow is conveyed past the motor to the suction side of the pump.

17. Method according to one of claims 14 to 16, characterised in that the adjustment of the first part of the operating medium conveyed by the feed line and the second part of the operating medium conveyed by the bypass line is performed by means arranged upstream of the retarder in flow direction.

18. Method according to claim 17, characterised in that to adjust the first and the second part means are also provided downstream of the retarder in flow direction.

19. Drive unit according to one of claims 1 to 13 with a regulating device for setting a predetermined braking torque, whereby the regulating device comprises: at least one control/regulating unit and the regulating unit is characterised in that at least one control/regulating unit on the basis of the given braking torque drives at least the means for dividing the operating medium, such that according to the braking torque to set at least a first part of the operating medium is conveyed via the retarder and a second part past the retarder.

20. Drive unit according to claim 19, characterised in that the drive unit to adjust the predetermined retarder braking torque also comprises means arranged downstream of the retarder in flow direction.

**Revendications**

1. Unité d'entraînement à moteur qui comprend au moins :

    - un moteur, un ralentisseur hydrodynamique et au moins une pompe,
    - au moins une conduite d'amenée pour milieu de travail au ralentisseur,
    - au moins une conduite de dérivation par laquelle du milieu de travail contourne le ralentisseur,

    caractérisé en ce que l'unité d'entraînement comprend en outre des moyens qui sont disposés en amont du ralentisseur dans la direction d'écoulement et à l'aide desquels le courant total est réparti en au moins deux fractions prédéterminées, une première fraction prédéterminée du milieu de travail étant dirigée par la conduite d'amenée à travers le ralentisseur et une deuxième fraction prédéterminée étant passée en dehors du ralentisseur à travers une première conduite de dérivation sur celui-ci.

2. Unité d'entraînement selon la revendication 1, caractérisée en ce que les moyens précités séparent le courant total en trois fractions prédéterminées parmi lesquelles la troisième fraction prédéterminée est dirigée vers le côté d'aspiration de la pompe dans une deuxième conduite de dérivation sur le ralentisseur et la première conduite de dérivation.

3. Unité d'entraînement selon la revendication 1 ou la revendication 2, caractérisée en ce que la première conduite de dérivation comprend un moyen disposé à la suite du ralentisseur à l'aide duquel le courant ayant traversé le ralentisseur peut être séparé en deux courants partiels de ralentisseur, le premier courant partiel de ralentisseur étant réuni au courant partiel de la première conduite de dérivation et le deuxième courant partiel de ralentisseur étant dirigé en contournement du ralentisseur, vers l'aspiration de la pompe.

4. Unité d'entraînement selon l'une des revendications 1 à 3, caractérisée en ce que les moyens disposés en amont du ralentisseur, comprennent un dispositif de vanne.

5. Unité d'entraînement selon la revendication 4, caractérisée en ce que le dispositif de vannes est une vanne à plusieurs voies avec au moins trois positions de commutation de sorte que le milieu de travail est réparti dans la première position de commutation par la conduite de dérivation et dans la troisième position de commutation à travers la conduite d'amenée ainsi que dans la deuxième position de commutation le courant total est divisé en au moins deux courants partiels, où une première fraction prédéterminée du milieu de travail est passée par la conduite de dérivation et une deuxième fraction prédéterminée du milieu de travail est passée par la conduite d'amenée.

6. Unité d'entraînement selon l'une des revendications 4 et 5, caractérisée en ce que la vanne est formée sous forme de vanne régulatrice en permanence, de façon que la répartition du courant total soit ajustable progressivement ou par fines étapes en au moins une première fraction prédéterminée du milieu de travail qui est passée par la conduite de dérivation et en une deuxième fraction prédéterminée du milieu de travail qui est passée par la conduite d'amenée.

7. Unité d'entraînement selon l'une des revendications 1 à 6, caractérisée en ce que la conduite d'amenée est un élément constitutif d'un circuit combiné de refroidissement et de freinage, et la conduite de dérivation un élément constitutif d'un circuit de refroidissement.

8. Unité d'entraînement selon l'une des revendications 1 à 7, caractérisée en ce qu'au moins une autre pompe est disposée dans le circuit de refroidissement et/ou dans le circuit combiné de refroidissement et de freinage.

9. Unité d'entraînement selon la revendication 8, caractérisée en ce que on a disposé en arrière au moyen, au moins une autre pompe dans la direction du courant.

10. Unité d'entraînement selon l'une des revendications 1 à 9, caractérisée en ce que les moyens comprennent des étranglements et/ou une pompe réglable.

11. Unité d'entraînement selon l'une des revendications 1 à 10, caractérisée en ce que le ralentisseur est un ralentisseur primaire.

12. Unité d'entraînement conformément à l'une des revendications 1 à 10, caractérisée en ce que le ralentisseur est un ralentisseur secondaire.

13. Unité d'entraînement conformément à la revendication 12, caractérisée en ce que le circuit du milieu de travail ou de milieu de refroidissement est séparé du circuit habituel de refroidissement du moteur et en ce que le transfert de chaleur sur le circuit habituel de refroidissement de moteur, s'effectue à l'aide d'un échangeur de chaleur.

14. Procédé d'ajustement du couple de freinage du ralentisseur d'une unité d'entraînement selon l'une des revendications 1 à 13 dans lequel un couple de freinage prédéterminé du ralentisseur est réglé de telle sorte que le procédé comprenne au moins les étapes suivantes :

- le courant total de milieu de travail est séparé en au moins deux courants partiels dans la direction du courant en amont du ralentisseur, où une première fraction prédéterminée de milieu de travail est passée sous forme de courant partiel à travers la conduite d'amenée et par le ralentisseur, et une deuxième fraction prédéterminée est passée sous forme de courant partiel par la première conduite de contournement du ralentisseur.

15. Procédé selon la revendication 14, caractérisé en ce que le courant total est séparé en trois courants partiels où le troisième courant partiel prédéterminé est passé dans une deuxième conduite de contournement du ralentisseur et de la première conduite de dérivation vers le côté d'aspiration de la pompe.

16. Procédé selon l'une des revendications 14 à 15, caractérisé en ce que le courant partiel qui est passé dans le ralentisseur est séparé en deux courants partiels de ralentisseur, où le premier courant partiel de ralentisseur est réuni au courant partiel de la première conduite de dérivation, et le deuxième courant partiel de ralentisseur est passé en dehors du moteur vers le côté d'aspiration de la pompe.

17. Procédé selon l'une des revendications 14 à 16, caractérisé en ce que l'ajustement de la première fraction de milieu de travail passée par la conduite d'amenée, et de la fraction passée par la conduite de dérivation, s'effectue à l'aide de moyens disposés en amont du ralentisseur selon le sens d'écoulement.

18. Procédé selon la revendication 17, caractérisé en ce qu'en vue du réglage des première et deuxième fractions de milieu de travail, des moyens supplémentaires sont disposés en aval du ralentisseur selon le sens d'écoulement.

19. Unité d'entraînement conformément à l'une des revendications 1 à 13, avec un dispositif de réglage pour l'ajustement d'un couple de freinage prédéterminé, dans lequel le dispositif de réglage comprend au moins une unité de commande / réglage et l'unité de réglage est caractérisée en ce qu'elle commande au moins une unité de commande / réglage sur la base du couple de freinage prédéterminé en actionnant au moins le moyen pour la séparation du milieu de travail de telle sorte qu'en fonction du couple de freinage qui doit être établi, au moins une première fraction de milieu de travail soit passée par le ralentisseur et qu'une deuxième fraction contourne le ralentisseur.

20. Unité d'entraînement selon la revendication 19, caractérisée en ce que l'unité d'entraînement possède en vue du réglage du couple de freinage prédéterminé du ralentisseur un autre moyen disposé en aval du ralentisseur dans le sens du courant.

## Fig.1

## Fig.1A

Fig.1B

Fig.2

Fig.2A

# Fig.3

# Fig.4

# Fig.5

Fig.6

Fig.7

# Fig.8

# Fig.9

Fig.10

Fig.11

Fig.12

EP 0 885 351 B1